# EUROPEAN PATENT SPECIFICATION

(11) **EP 3 000 654 B1**
(45) Date of publication and mention of the grant of the patent: **01.11.2017**
(21) Application number: 15184525.2
(22) Date of filing: 09.09.2015
(51) Int. Cl.: B60N 2/60, B60N 2/28

(54) **CHILD SEAT ANCHOR COVER AND VEHICLE SEAT**
KINDERSITZANKERABDECKUNG UND FAHRZEUGSITZ
COUVERCLE D'ANCRAGE DE SIÈGE ENFANT ET SIÈGE DE VÉHICULE

(30) Priority: 22.09.2014 JP 2014192853
(43) Date of publication of application: 30.03.2016
(73) Proprietor: NHK Spring Co., Ltd., Yokohama-shi, Kanagawa 236-0004 (JP); Subaru Corporation, Tokyo 150-8554 (JP)
(72) Inventor: Kusunoki, Arata, Yokohama-shi, Kanagawa 236-0004 (JP); Aoki, Yoichi, Yokohama-shi, Kanagawa 236-0004 (JP); Kobayashi, Daisuke, Yokohama-shi, Kanagawa 236-0004 (JP); Handa, Masami, 150-8554 Tokyo (JP); Abe, Manabu, 150-8554 Tokyo (JP)
(74) Representative: DREISS Patentanwälte PartG mbB

(56) References cited:
- EP-A1- 2 853 441
- DE-C1- 10 044 621
- DE-U1- 20 006 692

## Description

### Background of the Invention

### Technical Field

The present invention relates to a vehicle seat, and to an anchor cover that is mounted to a vehicle seat and that, by a cover member, opens and closes an opening portion into which a connector of a child seat is inserted.

### Related Art

The opening/closing mechanism of a shielding cover that is disclosed in Japanese Patent Application Laid-Open (JP-A) No. 2011-116178 has a concave space into which hardware (a connector) of a removable seat is inserted, a striker (anchor) that is shaped as a shaft and is provided so as to traverse the opening portion of the concave space, and a shielding cover that shields the opening portion. This shielding cover has a pair of arm portions that extend-out from a cover member that is a cover main body, and that engage with both axial direction end portions of the striker. The shielding cover can move between a shielding position of the opening portion and an opening position of the opening portion. A shielding cover with features of the preamble of claim 1 is known from EP 2 853 441 A1. Other shielding covers are known from DE 100 44 621 C1 or DE 200 06 692 U1.

### Summary

In the state in which the shielding cover of the above-described structure is positioned at the opening position, the cover member is stored beneath the striker, but the pair of arm portions extend so as to overlap parts of the opening portions at the both axial direction sides above the striker. Therefore, because the substantial open region of the opening portion is narrowed by the pair of arm portions, there is room for improvement from the standpoint of ensuring that the substantial open region of the opening portion is wide.

In view of the above-described circumstances, a subject of the present invention is to provide a child seat anchor cover and a vehicle seat that can ensure that the substantial open region of an opening portion is wide, in a structure in which a connector of a child seat is inserted into the opening portion and a cover member of the opening portion is stored while the opening portion is open.

A child seat anchor cover according to the invention is defined in claim 1.

In accordance with the invention, the opening portion, into which a connector of a child seat is inserted from the seat front side, is formed in the base member that is mounted to a vehicle seat. The opening portion is opened and closed by the cover member that is mounted so as to be movable with respect to the base member. When the cover member is moved from a closing position of closing the opening portion to a stored position, the opening portion is opened, and the cover member is stored in a state of extending from the lower end portion of the opening portion toward the seat rear side (the deep side in the direction of inserting the connector). Due thereto, the cover member can be stored at the lower end portion of the opening portion in a state in which jutting-out of the cover member toward the seat upper side is suppressed. Therefore, the substantial open region of the opening portion can be ensured to be wide.

In accordance with the present invention, an intermediate position is set between the closing position and the stored position, and the cover member is rotated between the closing position and the intermediate position with respect to the base member, and is slid between the intermediate position and the stored position with respect to the base member.

In accordance with the invention, the cover member is moved, by rotation and sliding with respect to the base member, between the closing position at which the cover member closes the opening portion, and the stored position at which the cover member opens the opening portion and is stored in a state of extending toward the seat rear side from the lower end portion of the opening portion. Due thereto, the structure for moving the cover member between the closing position and the stored position, at which the position and posture of the cover member differ greatly, can be made to be simple.

In a child seat anchor cover of an aspect of the present invention, the base member has a rotation fulcrum portion, and the cover member has a rotating/engaging portion that engages with the rotation fulcrum portion in a state in which the cover member is positioned within a range from the closing position to the intermediate position, and the cover member falling-out toward the seat front side with respect to the base member is prevented by the engagement with the rotation fulcrum portion.

In accordance with this aspect, in the state in which the cover member is positioned within the range from the closing position to the intermediate position, the rotating/engaging portion that is provided at the cover member engages with the rotation fulcrum portion that is provided at the base member. Due thereto, the cover member is rotated with the rotation fulcrum portion being the fulcrum, and dropping-out of the cover member toward the seat front side with respect to the base member is prevented. Namely, the structure for rotating the cover member and the structure for preventing dropping-out of the cover member toward the seat front side are provided by a common structure that the engagement of the rotating/engaging portion of the cover member with the rotation fulcrum portion of the base member, and therefore, the structure of the anchor cover can be simplified.

In a child seat anchor cover of the present invention the base member has a slide guiding portion that guides the sliding, and the cover member has a posture adjusting portion that engages with the slide guiding portion at the intermediate position, and, due to the engagement with the slide guiding portion, the cover member is in a posture of running along a direction of sliding toward the stored position with respect to the base member.

In accordance with the invention, when the cover member is rotated from the closing position to the intermediate position with respect to the base member, the posture adjusting portion that is provided at the cover member engages with the slide guiding portion that is provided at the base member. Due thereto, the cover member is set in a posture of running along the direction of sliding toward the stored position with respect to the base member. Therefore, the sliding operation thereafter can be carried out easily.

In a child seat anchor cover of another aspect of the present invention a holding portion, that vertically nips and holds the cover member that is positioned at the stored position, is provided at the base member.

In this aspect, in the state in which the cover member is positioned at the stored position, the holding portion that is provided at the base member vertically nips and holds the cover member. Due thereto, the cover member, that is positioned at the stored position, rattling with respect to the base member can be prevented or suppressed.

In a child seat anchor cover of another aspect of the present invention an elastically deforming portion, that is elastically deformed due to the cover member moving to the stored position, is provided at at least one of the holding portion and the cover member.

In this aspect, when the cover member is moved to the stored position, the elastically deforming portion, that is provided at at least one of the cover member and the holding portion of the base member, is elastically deformed. Due thereto, rattling of the cover member with respect to the base member can be suppressed elastically, and therefore, the effect of preventing or suppressing such rattling can be improved.

In a child seat anchor cover of another aspect of the present invention at the stored position, the cover member contacts the base member at two places that are apart in a seat front-rear direction, and contacts the base member at other two places that are apart in a seat left-right direction.

In this aspect, at the stored position, the cover member contacts the base member at two places that are apart in the seat front-rear direction, and contacts the base member at other two places that are apart in the seat left-right direction. Due thereto, rattling, toward the front and the rear, and the left and the right, and up and down, of the cover member with respect to the base member can be effectively prevented or suppressed.

A vehicle seat of the present invention is defined in claim 6. In accordance with this aspect, the base member of the child seat anchor cover is mounted to the upwardly-projecting portion that is provided at the rear end portion of the seat cushion. Because the anchor cover is any one of the first through seventh aspects, the above-described effects can be obtained.

As described above, the child seat anchor cover and vehicle seat relating to the present invention can ensure that the substantial open region of an opening portion is wide, in a structure in which a cover member, that opens and closes the opening portion into which a connector of a child seat is inserted, is stored in a state in which the opening portion is open.

### Brief Description of the Drawings

Embodiments of the present invention will be described in detail based on the following figures, wherein:
Fig. 1 is a perspective view of a vehicle seat relating to an embodiment of the present invention, and is a drawing showing a state in which opening portions of child seat anchor covers relating to the embodiment of the present invention are closed;
Fig. 2 is a perspective view showing a portion of the vehicle seat in an enlarged manner, and is a drawing showing a state in which the opening portions of the anchor covers are open;
Fig. 3 is a perspective view showing the structure of the vicinity of the anchor cover at the vehicle seat, in a state of being viewed from an obliquely front side of the seat;
Fig. 4 is a perspective view showing the structure of Fig. 3 in a state of being viewed from an obliquely rear side of the seat;
Fig. 5 is a perspective view showing a base member, that is a structural member of the anchor cover, in a state of being viewed from an obliquely front side;
Fig. 6 is a perspective view showing the base member in a state of being viewed from an obliquely rear side;
Fig. 7 is a perspective view showing the base member in a state of being viewed from the front side and slightly from the left side;
Fig. 8 is a perspective view showing a cover member, that is a structural member of the anchor cover, in a state of being viewed from a reverse surface side;
Fig. 9 is a side view for explaining a way of mounting the cover member to the base member;
Fig. 10 is a perspective view in which the anchor cover is viewed from an obliquely front side, and is a drawing showing a state in which the cover member is positioned at a closing position;
Fig. 11 is a perspective view that corresponds to Fig. 10 and shows a state in which the cover member is positioned at an intermediate position;
Fig. 12 is a perspective view that corresponds to Fig. 10 and shows a state in which the cover member is positioned at a stored position;
Fig. 13 is a side view in which the anchor cover is viewed from the left side, and is a drawing showing a state in which the cover member is positioned at the closing position;
Fig. 14 is a side view that corresponds to Fig. 13 and shows a state in which the cover member is positioned at the intermediate position;
Fig. 15 is a side view showing a portion of Fig. 14 in an enlarged manner;
Fig. 16 is a side view that corresponds to Fig. 13 and shows a state in which the cover member is positioned between the intermediate position and the stored position;
Fig. 17 is a side view that corresponds to Fig. 13 and shows a state in which the cover member is positioned at the stored position;
Fig. 18 is a side view showing a portion of Fig. 17 in an enlarged manner;
Fig. 19 is a cross-sectional view showing the cross-section cut along line F19-F19 of Fig. 12;
Fig. 20 is a cross-sectional view showing the cross-section cut along line F20-F20 of Fig. 12;
Fig. 21 is a perspective view showing a state in which a child seat anchor cover relating to a second embodiment of the present invention is viewed from an obliquely front side, and is a drawing showing a state in which a cover member is positioned at the closing position;
Fig. 22 is a perspective view that corresponds to Fig. 20 and shows a state in which the cover member is positioned at the intermediate position;
Fig. 23 is a perspective view that corresponds to Fig. 20 and shows a state in which the cover member is positioned at the stored position;
Fig. 24 is a perspective view showing a base member, that is a structural member of the anchor cover, in a state of being viewed from an obliquely front side;
Fig. 25 is a perspective view showing the base member, that is a structural member of the anchor cover, in a state of being viewed from an obliquely rear side;
Fig. 26 is a perspective view showing the cover member, that is a structural member of the anchor cover, in a state of being viewed from a reverse surface side;
Fig. 27 is a side view in which the anchor cover is viewed from the left side, and is a drawing showing a state in which the cover member is positioned at the closing position;
Fig. 28 is a side view that corresponds to Fig. 27 and shows a state in which the cover member is positioned at the intermediate position;
Fig. 29 is a side view that corresponds to Fig. 27 and shows a state in which the cover member is positioned between the intermediate position and the stored position;
Fig. 30 is a side view that corresponds to Fig. 27 and shows a state in which the cover member is positioned at the stored position;
Fig. 31 is a side view showing a portion of Fig. 30 in an enlarged manner;
Fig. 32 is a cross-sectional view showing the cross-section cut along line F32-F32 of Fig. 23; and
Fig. 33 is a cross-sectional view showing the cross-section cut along line F33-F33 of Fig. 23.

### Detailed Description of the Invention

### <First Embodiment>

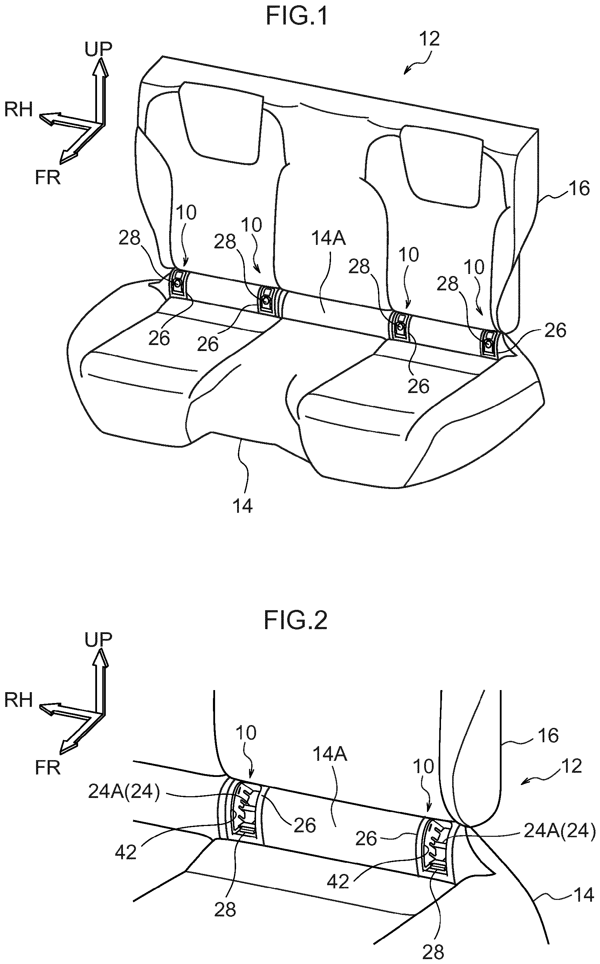

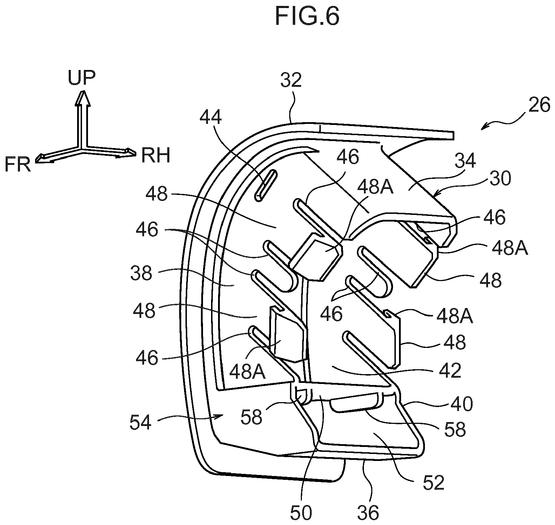

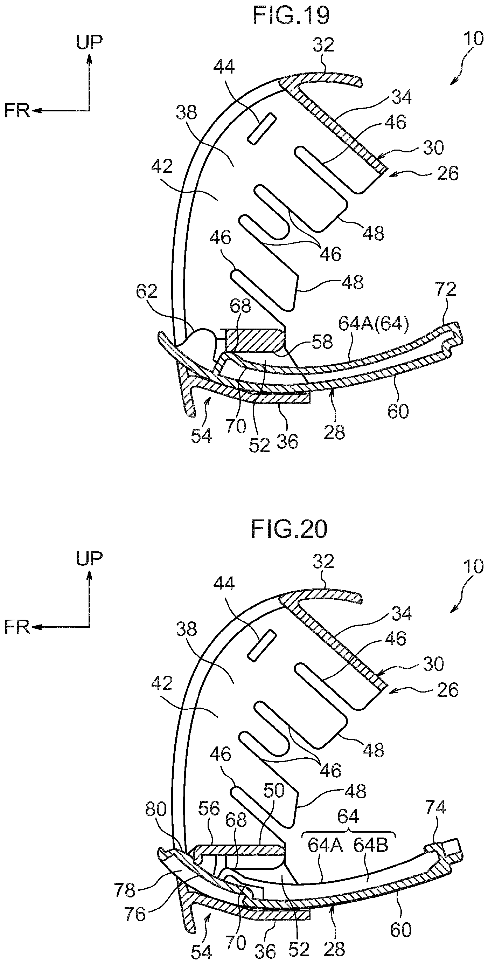

A child seat anchor cover 10 (hereinafter simply called "anchor cover 10") relating to a first embodiment of the present invention, and a rear seat 12 that serves as a vehicle seat relating to the first embodiment of the present invention, are described hereinafter by using Fig. 1 through Fig. 20. Note that arrow FR, arrow UP and arrow RH that are shown appropriately in the respective drawings indicate the frontward direction, the upward direction and the right direction (one transverse direction) of the rear seat 12, respectively. Hereinafter, when front-rear, transverse, left-right, vertical, and up-down directions are used, they mean the directions with respect to the rear seat 12 unless otherwise indicated.

### (Structure)

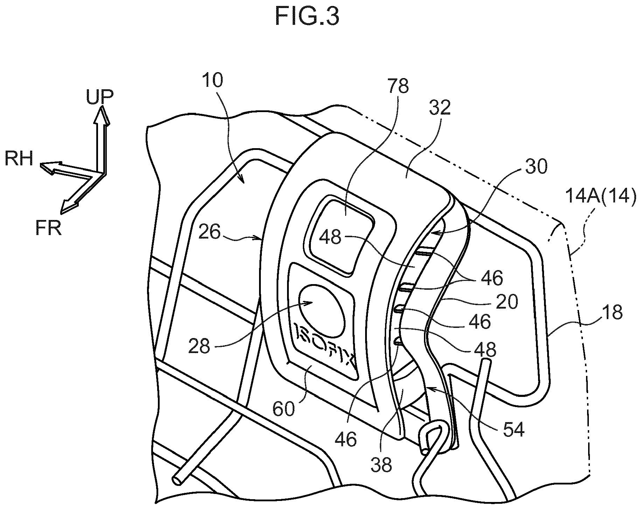

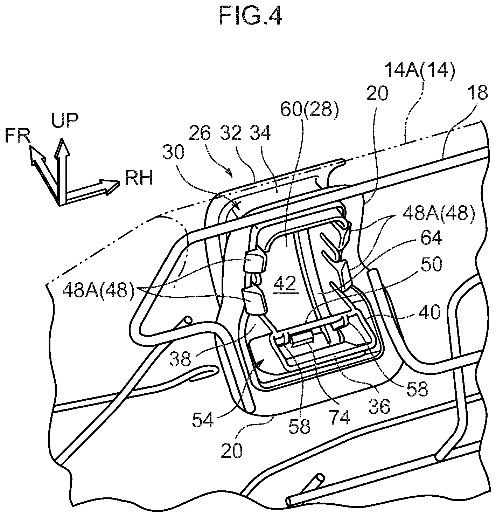

The rear seat 12 of an automobile, as shown in Fig. 1 and Fig. 2, has a seat cushion 14 on which vehicle occupants sit, and a seat back 16 that stands upright from the rear end portion of the seat cushion 14 and is the backrest of the vehicle occupants. An upwardly-projecting portion 14A, that projects upward and extends in the seat transverse direction, is provided at the rear end portion of the seat cushion 14. The pair of left and right anchor covers 10 are mounted to the upwardly-projecting portion 14A at the transverse direction both sides of each of the left and right seats. These anchor covers 10 are respectively fit-into unillustrated mounting holes that are formed at the upwardly-projecting portion 14A, and are respectively anchored with anchoring hardware 20 that are frame-shaped and that are welded to a wire frame 18 (see Fig. 3 and Fig. 4) of the seat cushion 14.

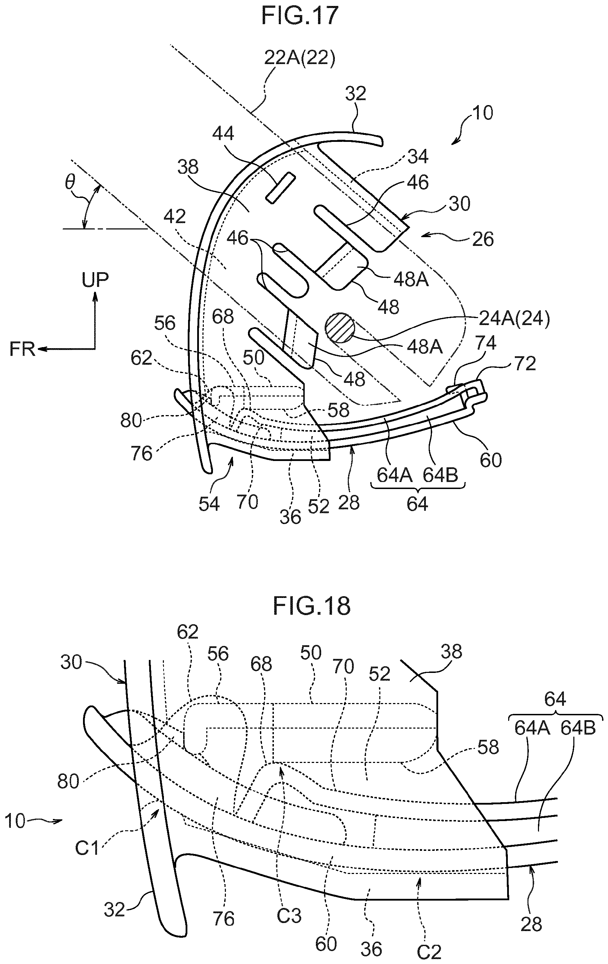

The anchor cover 10 is an ISOFIX anchor cover that covers an ISOFIX anchor 24 (see Fig. 2 and Fig. 17) that is for mounting, to the rear seat 12, a child seat 22 (only a portion of which is illustrated in Fig. 17) that conforms to ISOFIX (an internationally standard). The ISOFIX anchor 24 is formed by, for example, a striker 24A that is formed by a wire being welded to an unillustrated, flat-plate-shaped base plate. The ISOFIX anchor 24 is disposed at the rear of the seat cushion 14 and beneath the seat back 16, and is fixed to an unillustrated floor panel of the vehicle body. Note that the ISOFIX anchor 24 may be structured so as to be fixed to the frame of the rear seat 12.

Each of the anchor covers 10 is structured by a base member 26 that is anchored on the aforementioned anchoring hardware 20 and is mounted to the seat cushion 14, and a cover member 28 that is mounted so as to be movable with respect to the base member 26. These base member 26 and cover member 28 are formed by, for example, injection molding of resin. Hereinafter, when the base member 26 is described by using front-rear, transverse, left-right, vertical and up-down directions, they indicate the directions with respect to the rear seat 12 in the state in which the base member 26 is mounted to the rear seat 12.

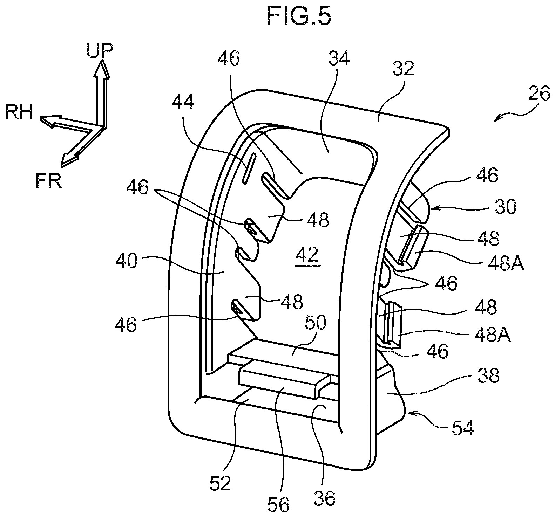

As shown in Fig. 5 through Fig. 7, the base member 26 integrally has a tubular portion 30 and a flange portion 32. The tubular portion 30 is formed substantially in the shape of an angular tube and has an upper wall 34, a lower wall 36, a left wall 38 and a right wall 40. The flange portion 32 extends-out in the form of a flange from the front end portion of the tubular portion 30. The vertical direction dimension of the base member 26 is set to be larger than the left-right direction dimension thereof. An opening portion 42, that is substantially rectangular in cross-section and that passes-through the base member 26 in the front-rear direction, is formed at the central portion of the base member 26. A connector 22A (see Fig. 17) of the aforementioned child seat 22 is inserted into the opening portion 42 from the front side, and the connector 22A is connected to the striker 24A.

The upper wall 34 and the lower wall 36 of the tubular member 30 face one another in the vertical direction. The lower wall 36 runs substantially along the front-rear direction. The upper wall 34 is inclined toward the lower side (the lower wall 36 side) while heading toward the rear side. Further, the left wall 38 and the right wall 40 face one another in the transverse direction, and extend parallel along the vertical direction. The lower portion side of the flange portion 32 runs along the vertical direction, and the upper portion side is curved so as to head toward the rear side while heading toward the upper side.

Lock holes 44 for the time of closing the cover (hereinafter simply called "lock holes 44") that are shaped as long holes are formed in the upper end portions of the left wall 38 and the right wall 40 in vicinities of the flange portion 32. These lock holes 44 correspond to the cover member 28. Further, plural (here, four) slits 46 are formed in the rear end side of each of the left wall 38 and the right wall 40. These slits 46 are cut-out from the rear end portions of the left wall 38 and the right wall 40 toward an obliquely front and upper side, and are lined-up in the vertical direction. Due to these slits 46 being formed, a pair of upper and lower anchor pieces 48 that are elastically deformable is formed at each of the left wall 38 and the right wall 40. A claw portion 48A, that projects-out toward the side opposite the opening portion 42, is formed at the distal end portion (rear end portion) of each of the anchor pieces 48.

When the base member 26 that has the above-described structure is fit into the mounting hole of the above-described upwardly-projecting portion 14A, the claw portions 48A of the respective anchor pieces 48 slide with respect to the anchoring hardware 20, and the respective anchor pieces 48 elastically deform toward the opening portion 42 side. Thereafter, due to the respective anchor pieces 48 elastically returning and the claw portions 48A thereof catching on the anchoring hardware 20, the base member 26 is anchored to the anchoring hardware 20. In this anchored state, the flange portion 32 of the base member 26 is disposed so as to be substantially coplanar with the surface of the upwardly-projecting portion 14A.

Further, an intermediate wall 50, that spans integrally between the left wall 38 and the right wall 40, is provided at the lower end portion of the tubular portion 30 of the base member 26 in a vicinity of above the lower wall 36. The intermediate wall 50 is formed substantially parallel to the lower wall 36, and partitions the lower portion of the opening portion 42 into portions above and below. A cover storage gap 52, for insertion and storage of the cover member 28, is formed between the intermediate wall 50 and the lower wall 36. Together with the lower end portion of the left wall 38 and the lower end portion of the right wall 40 and the lower wall 36, the intermediate wall 50 structures a holding portion 54 for holding the cover member 28.

A base-member-side cover drop-out preventing rib 56, that serves as a rotation fulcrum portion, is formed so as to project-out toward the front side from the transverse direction intermediate portion of the front end portion of the intermediate wall 50. The front end portion of the base-member-side cover drop-out preventing rib 56 is bent toward the lower side, and the cross-sectional shape of the base-member-side cover drop-out preventing rib 56, as seen from the seat transverse direction, is formed to be L-shaped. Further, a pair of left and right base-member-side cover guiding ribs 58 that serve as slide guiding portions are formed at the lower surface of the intermediate wall 50. These base-member-side cover guiding ribs 58 project-out toward the lower side from the lower surface of the intermediate wall 50, and extend in the front-rear direction. The base-member-side cover drop-out preventing rib 56 and the base-member-side cover guiding ribs 58 correspond to the cover member 28.

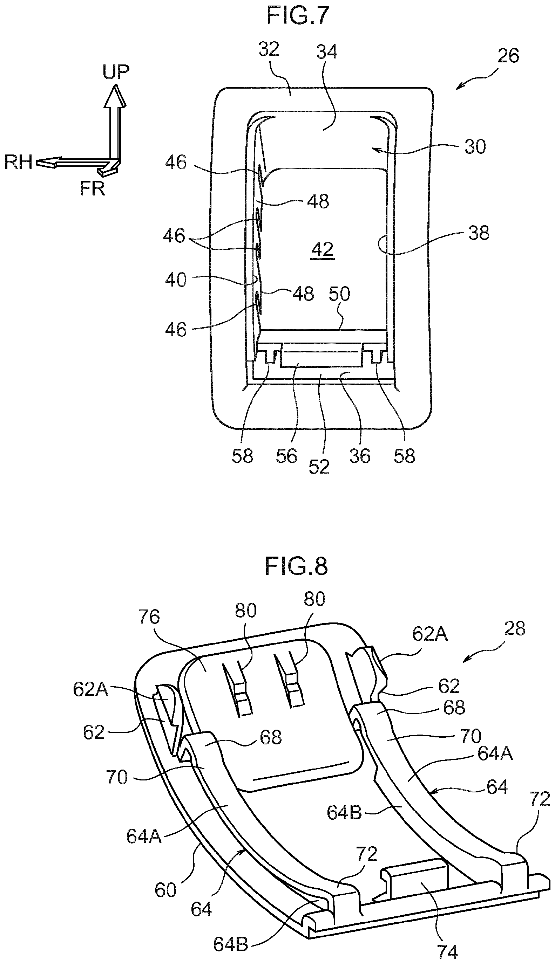

As shown in Fig. 8, the cover member 28 has a cover main body 60 that is formed in the shape of a substantially elongated rectangular plate. The cover main body 60 is curved in an arch shape as seen from the transverse direction, i.e., from a direction orthogonal to the length direction and the thickness direction of the cover main body 60. A pair of left and right lock pieces 62 for the time of closing the cover (hereinafter simply called "lock pieces 62") are provided at the reverse surface of the cover main body 60 (the surface at the central side in a direction of the radius of curvature of the arch shape). The lock pieces 62 are provided at a length direction one end portion (the upper end portion) of the cover main body 60 and project-out from the transverse direction both end portions of the cover main body 60. Claw portions 62A, that project-out toward the transverse direction outer sides of the cover main body 60, are formed at the distal end portions of the lock pieces 62. The lock pieces 62 correspond to the above-described lock holes 44.

Further, a pair of left and right cover guiding ribs 64 is provided at the reverse surface of the cover main body 60. The cover guiding ribs 64 project-out from the transverse direction both end portions of the cover main body 60, and extend from the length direction other end (the lower end) of the cover main body 60 to a vicinities of the lock pieces 62. These cover guiding ribs 64 have guide walls 64A that face the cover main body 60 with gaps therebetween. The length direction both end portions of the guide walls 64A are curved toward the cover main body 60 side, and are connected integrally to the reverse surface of the cover main body 60. Further, vertical walls 64B extend-out integrally from transverse direction one end portions of the guide walls 64A (the end portions at the transverse direction central side of the cover main body 60), toward the cover main body 60 side. The cover main body 60 side end portions of the vertical walls 64B are connected integrally to the reverse surface of the cover main body 60.

However, the vertical walls 64B are omitted at the length direction one end sides (the lock piece 62 sides) of the guide walls 64A. Further, convex portions 68 that protrude (bulge) out toward the side opposite the cover main body 60 are formed at the length direction one end portions of the guide walls 64A. The length direction one end portions of the guide walls 64A, including the convex portions 68, are elastically deforming portions 70. Further, the length direction other end portions of the guide walls 64A are angle adjusting portions 72 that serve as posture adjusting portions. The angle adjusting portions 72 correspond to the above-described base-member-side cover guiding ribs 58.

Moreover, a cover drop-out preventing hook 74 that serves as a rotating/engaging portion is provided at the reverse surface of the cover main body 60. The cover drop-out preventing hook 74 projects-out from the transverse direction central portion of the lower end portion of the cover main body 60, and the distal end portion is bent toward the upper end side of the cover main body 60. Further, a bulging portion 76, that bulges toward the reverse side of the cover main body 60, is formed at the upper end portion of the cover main body 60. Due thereto, a concave portion 78 that is rectangular (see Fig. 3 and Fig. 10 through Fig. 12) is formed at the obverse side of the upper end portion of the cover main body 60. Further, a pair of left and right drop-out preventing ribs 80 for the time of storing the cover (hereinafter simply called "cover drop-out preventing ribs 80") are provided at the peak surface of the bulging portion 76 that structures a portion of the reverse surface of the main body portion 60. The cover drop-out preventing ribs 80 are formed so as to be lined-up in the transverse direction of the cover main body 60, and correspond to the above-described base-member-side cover drop-out preventing rib 56.

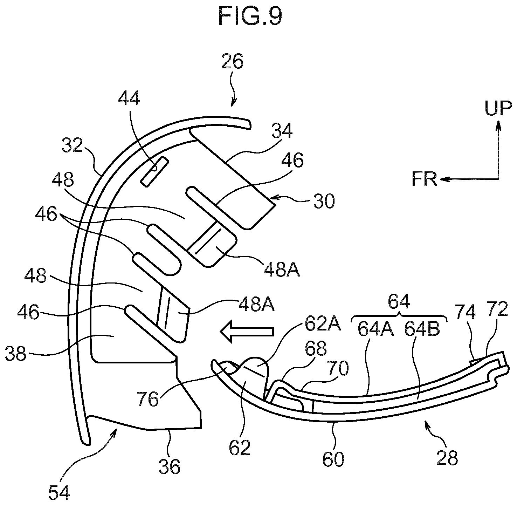

The cover member 28 that has the above-described structure is inserted into the cover storage gap 52 of the base member 26 from the rear side of the base member 26 (see Fig. 9). At this time, the elastically deforming portions 70 of the guide walls 64A slide with respect to the base-member-side cover guiding ribs 58 and elastically deform, and the cover drop-out preventing ribs 80 slide with respect to the base-member-side cover drop-out preventing rib 56 and elastically deform. When, from this state, the cover member 28 is pushed-in further toward the front side of the base member 26, the aforementioned sliding is cancelled, and the elastically deforming portions 70 and the base-member-side cover drop-out preventing rib 56 elastically return. Due thereto, the cover member 28 is mounted to the base member 26.

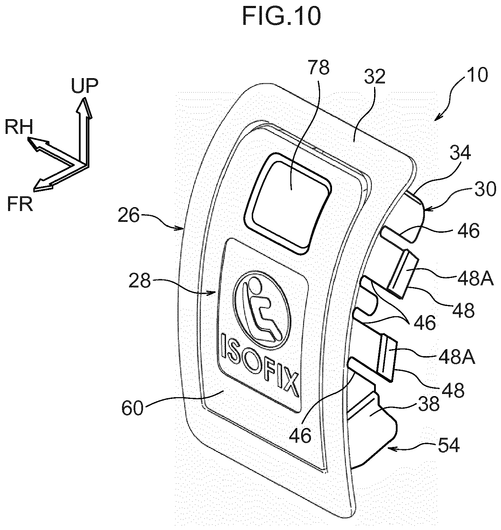

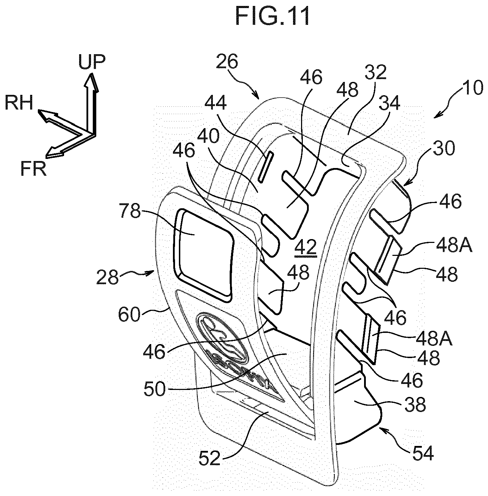

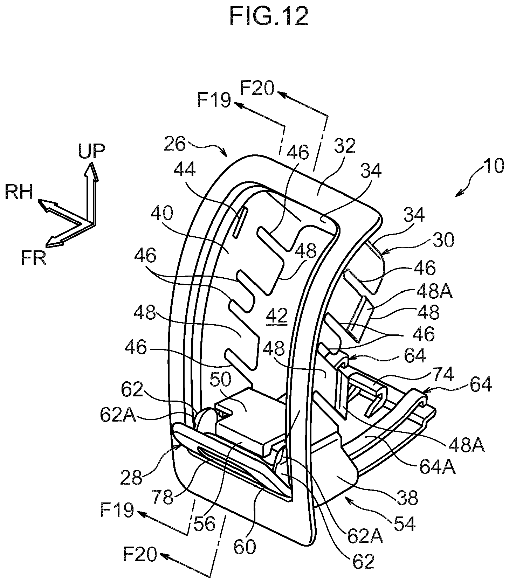

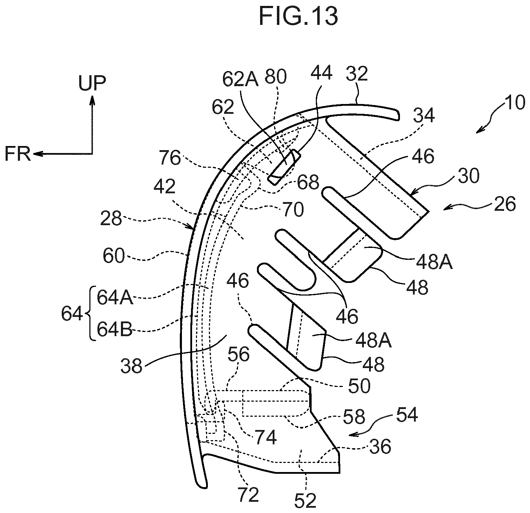

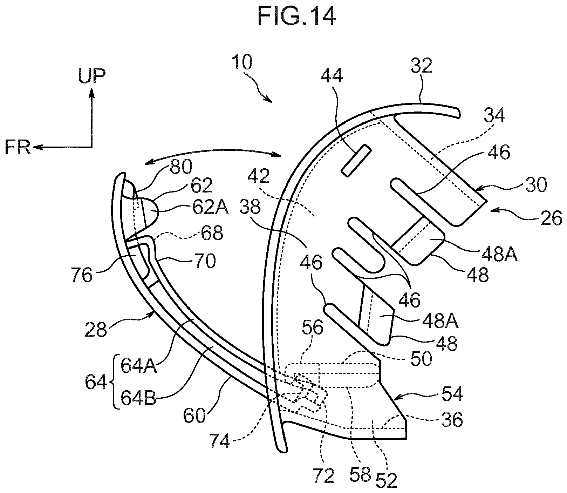

The cover member 28 that is mounted to the base member 26 can move (rotate) with respect to the base member 26 between a closing position shown in Fig. 10 and Fig. 13 and an intermediate position shown in Fig. 11 and Fig. 14, and can move (slide) with respect to the base member 26 between the intermediate position and a stored position shown in Fig. 12 and Fig. 17. The relationship between the base member 26 and the cover member 28 is described in detail hereinafter.

As shown in Fig. 10, in the state in which the cover member 28 is positioned at the closing position, the cover main body 60 is disposed coplanarly with the flange portion 32 of the base member 26, and the opening portion 42 of the base member 26 is closed by the cover main body 60. In this state, as shown in Fig. 13, the cover drop-out preventing hook 74 of the cover member 28 is engaged (meshed) with the base-member-side cover drop-out preventing rib 56, and the base-member-side cover drop-out preventing rib 56 is nipped-in by the cover drop-out preventing hook 74. Due thereto, the lower end portion of the cover member 28 is held (restrained) with respect to the base member 26. Further, in this state, as shown in Fig. 13, the claw portions 62A of the lock pieces 62 of the cover member 28 are caught on the edge portions of the lock holes 44 of the base member 26. Due thereto, the upper end portion of the cover member 28 is held (restrained) with respect to the base member 26.

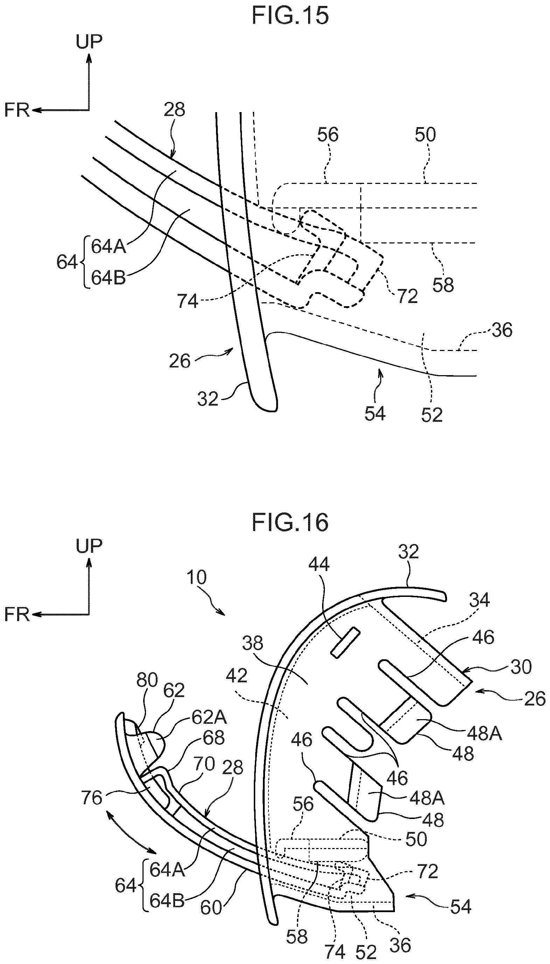

On the other hand, at the time of opening the opening portion 42, since a vehicle occupant hooks his/her finger or the like on the concave portion 78 of the cover member 28 and pulls the upper portion of the cover member 28 toward the front side, the lock pieces 62 elastically deform, and the state in which the claw portions 62A are caught on the lock holes 44 is released. Due thereto, the holding of the upper end portion of the cover member 28 with respect to the base member 26 is cancelled, and the cover member 28 moves to the intermediate position shown in Fig. 11 and Fig. 14 with respect to the base member 26. Due thereto, the opening portion 42 of the base member 26 is opened in a half-open state. At this time, the cover member 28 rotates in a downwardly-opening form with respect to the base member 26 in the state that the base-member-side cover drop-out preventing rib 56, with which the cover drop-out preventing hook 74 is engaged, is the rotation fulcrum (see Fig. 15).

Further, in the state in which the cover member 28 is positioned within a range from the closing position to the intermediate position, dropping-out of the cover member 28 toward the front side with respect to the base member 26 is prevented due to the engagement of the cover drop-out preventing hook 74 and the base-member-side cover drop-out preventing rib 56. Namely, the cover drop-out preventing hook 74 and the base-member-side cover drop-out preventing rib 56 function as a stopper for preventing the cover member 28 from dropping-out toward the front side with respect to the base member 26.

When the cover member 28 rotates to the intermediate position, as shown in Fig. 14 and Fig. 15, the angle adjusting portions 72 that are provided at the length direction other end portions of the cover guiding ribs 64 abut the base-member-side cover guiding ribs 58 of the base member 26. Due thereto, rotation of the cover member 28 further toward the lower side than the intermediate position is restricted. In this state, the cover member 28 is in a posture of running along the direction of sliding toward the stored position with respect to the base member 26.

Further, when the cover member 28 that is positioned at the intermediate position as described above is pushed toward the rear side, the cover member 28 slides from the intermediate position to the stored position with respect to the base member 26 (see Fig. 16). At this time, the cover guiding ribs 64 of the cover member 28 slide with respect to the base-member-side cover guiding ribs 58, and the obverse of the cover main body 60 slides with respect to the upper surface of the lower wall 36. Due thereto, there is a structure in which the sliding of the cover member 28 with respect to the base member 26 is guided.

When the cover member 28 reaches the stored position, as shown in Fig. 17, Fig. 18 and Fig. 20, the cover drop-out preventing ribs 80 of the cover member 28 engage with (abut) the base-member-side cover drop-out preventing rib 56. Due thereto, sliding of the cover member 28 further toward the rear side than the stored position is restricted, and dropping-out of the cover member 28 toward the rear side with respect to the base member 26 is prevented. Namely, the cover drop-out preventing ribs 80 and the base-member-side cover drop-out preventing rib 56 function as a stopper for preventing the cover member 28 from dropping-out toward the rear side with respect to the base member 26.

In the state in which the cover member 28 is positioned at the stored position, the cover member 28 is stored (housed) so as to extend toward (in a posture of extending toward) the rear side from the lower end portion of the opening portion 42, and the opening portion 42 is open. In this state, as shown in Fig. 17 through Fig. 19, the convex portions 68, that are provided at the left and right cover guiding ribs 64 of the cover member 28, are pushed toward the seat lower side by the left and right base-member-side cover guiding ribs 58 of the base member 26, and the elastically deforming portions 70 of the left and right cover guiding ribs 64 elastically deform toward the seat lower side. Due thereto, the obverse of the cover main body 60 is pushed-against the upper surface of the lower wall 36.

As shown in Fig. 18, the lower wall 36 is curved at the seat front-rear direction intermediate portion thereof, so as to run along the curvature of the cover main body 60. Due thereto, the lower wall 36 is formed so as to contact the cover main body 60, i.e., the cover member 28, at two places that are contact point C1 provided at the front end portion and contact point C2 provided at the rear portion. Further, the cover member 28 contacts the base member 26 at left and right contact points C3 that are respective points of contact between the left and right cover guiding ribs 64 and the left and right base-member-side cover guiding ribs 58. These contact points C3 are set so as to be positioned between the aforementioned contact points C1, C2 in the front-rear direction.

Namely, the cover member 28 contacts the base member 26 at two places (the contact points C1, C2) that are apart in the front-rear direction, and contacts the base member 26 at two places (the left and right contact points C3) that are apart in the left-right direction. In this state, the cover member 28 is nipped and held in the vertical direction by the lower wall 36 and the intermediate wall 50 of the holding portion 54 of the base member 26.

On the other hand, at the time when the cover member 28 is moved from the stored position to the closing position, the vehicle occupant hooks his/her finger or the like on the concave portion 78 of the cover member 28, and pulls the cover member 28 toward the front side. At this time, due to the sliding of the cover guiding ribs 64 with respect to the base-member-side cover guiding ribs 58, and the sliding of the cover main body 60 with respect to the lower wall 36, the cover member 28 is slid and guided with respect to the base member 26, and is slid from the stored position to the intermediate position.

When the cover member 28 reaches the intermediate position, the cover drop-out preventing hook 74 of the cover member 28 meshes with the base-member-side cover drop-out preventing rib 56 (the state shown in Fig. 14 and Fig. 15). Due thereto, sliding of the cover member 28 further toward the front side than the intermediate position is restricted. In this state, when force toward the seat upper side is applied to the cover member 28, the cover member 28 is rotated toward the seat upper side with respect to the base member 26 with the base-member-side cover drop-out preventing rib 56 being the fulcrum of the rotation. Then, at the time when the cover member 28 reaches the closing position, due to the claw portions 62A of the lock pieces 62 sliding on the left wall 38 and the right wall 40, the lock pieces 62 elastically deform temporarily toward the opening portion 42 side, and thereafter, elastically return, and the claw portions 62A catch on the edge portions of the lock holes 44. Due thereto, the cover member 28 is held (restrained) at the closing position.

### (Operation and Effects)

Operation and effects of the first embodiment are described next.

In the present embodiment, the opening portion 42, into which the connector 22A of the child seat 22 is inserted from the seat front side, is formed at the base member 26 of the anchor cover 10 that is mounted to the rear seat 12. The opening portion 42 is opened and closed by the cover member 28 that is mounted so as to be movable with respect to the base member 26. When the cover member 28 is moved from the closing position of closing the opening portion 42 to the stored position, the opening portion 42 is opened, and the cover member 28 is stored in a state of extending from the lower end portion of the opening portion 42 toward the rear side (the deep side in the direction of insertion of the connector 22A). Due thereto, the cover member 28 can be stored, in a state in which jutting-out thereof toward the upper side is suppressed, at the lower end portion of the opening portion 42, and therefore, the substantial open region of the opening portion 42 can be ensured to be wide.

Moreover, because the cover member 28 is stored in a state of extending from the lower end portion of the opening portion 42 toward the rear side, in a case in which a vehicle occupant of the automobile views the opening portion 42 from the seat front side, the cover member 28 is not interposed between the eyes of the vehicle occupant and the opening portion 42. Due thereto, the visibility of the opening portion 42 can be made to be excellent. Further, at the time when a vehicle occupant inserts the connector 22A of the child seat 22 into the opening portion 42, the cover member 28 does not get in the way. Therefore, the connector 22A can be easily inserted into the opening portion 42, and the mountability of the child seat 22 to the rear seat 12 can be made to be good. Note that Fig. 17 shows a state in the midst of mounting the child seat 22 to the rear seat 12. As shown in Fig. 17, by ensuring that the substantial open region of the opening portion 42 is wide, the allowable range of insertion angle θ of the connector 22A with respect to the opening portion 42 can be set to be large. Accordingly, for this reason as well, the work of inserting the connector 22A into the opening portion 42 can be made to be easy.

Further, in the open state of the opening portion 42, the cover member 28 is stored as described above. Therefore, the possibility of the cover member 28 being damaged due to interference with a vehicle occupant or an object of the like can be reduced, and loss of the cover member 28 can be prevented. Moreover, in the present embodiment, because the cover member 28 is stored at the lower side of the intermediate wall 50, the possibility of the cover member 28 being damaged due to interference between the cover member 28 and the connector 22A that is inserted in the opening portion 42 can be reduced. Further, in the present embodiment, the anchor cover 10 is structured by the two parts that are the base member 26 and the cover member 28. The number of parts is small, and the structure is simple, and therefore, the manufacturing cost of the anchor cover 10 can be kept low.

Further, the cover member 28 is rotated with respect to the base member 26 between the closing position and the intermediate position, and is slid with respect to the base member 26 between the intermediate position and the stored position. Due thereto, the structure for moving the cover member 28 between the closing position and the stored position, at which the position and the posture of the cover member 28 differ greatly, can be made to be simple.

Further, in the state in which the cover member 28 is positioned within the range from the closing position to the intermediate position, the cover drop-out preventing hook 74 that is provided at the cover member 28 engages with the base-member-side cover drop-out preventing rib 56 that is provided at the base member 26. Due thereto, the cover member 28 is rotated with the base-member-side cover drop-out preventing rib 56 being the fulcrum, and dropping-out of the cover member 28 toward the front side with respect to the base member 26 is prevented. Namely, the engagement of the cover drop-out preventing hook 74 with the base-member-side cover drop-out preventing rib 56 functions as the structure for rotating the cover member 28 and as the structure for preventing dropping-out of the cover member 28 toward the front side, and therefore, the structure of the anchor cover 10 can be simplified.

Further, when the cover member 28 is rotated from the closing position to the intermediate position with respect to the base member 26, the angle adjusting portions 72 of the cover guiding ribs 64 that are provided at the cover member 28 engage with (abut) the base-member-side cover guiding ribs 58. Due thereto, the cover member 28 is set in a posture of running along the direction of sliding toward the stored position with respect to the base member 26, and the sliding operation thereafter can be carried out easily.

Moreover, in the state in which the cover member 28 is positioned at the stored position, the holding portion 54 that is provided at the base member 26 vertically nips and holds the cover member 28. Due thereto, the cover member 28, that is positioned at the stored position, rattling with respect to the base member 26 can be prevented or suppressed, and therefore, this contributes to the prevention of the occurrence of abnormal noise at the time when the vehicle is traveling. Moreover, the cover member 28, that is nipped and held in the vertical direction by the holding portion 54 of the base member 26 as described above, contacts the base member 26 at two places (the contact points C1, C2: see Fig. 18) that are apart in the front-rear direction, and contacts the base member 26 at other two places (the left and right contact points C3: see Fig. 18) that are apart in the seat left-right direction. Due thereto, rattling, toward the front and the rear, the left and the right, and the up and down, of the cover member 28 with respect to the base member 26 can be effectively prevented or suppressed.

Moreover, when the cover member 28 is moved to the stored position, the elastically deforming portions 70 that are provided at the cover guiding ribs 64 of the cover member 28 are elastically deformed by sliding with respect to the base-member-side cover guiding ribs 58. Due thereto, rattling of the cover member 28 with respect to the base member 26 can be elastically suppressed, and therefore, the effect of preventing or suppressing such rattling can be improved.

### <Second Embodiment>

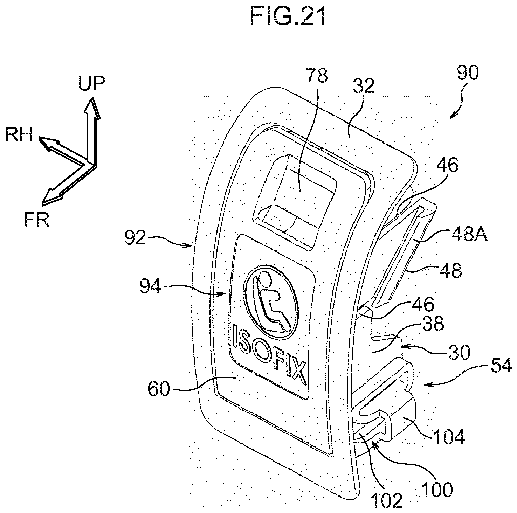

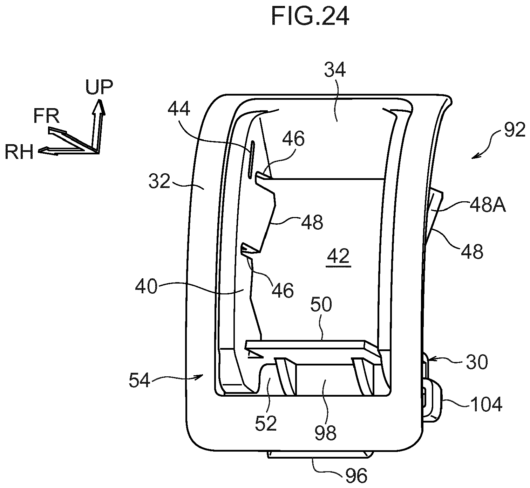

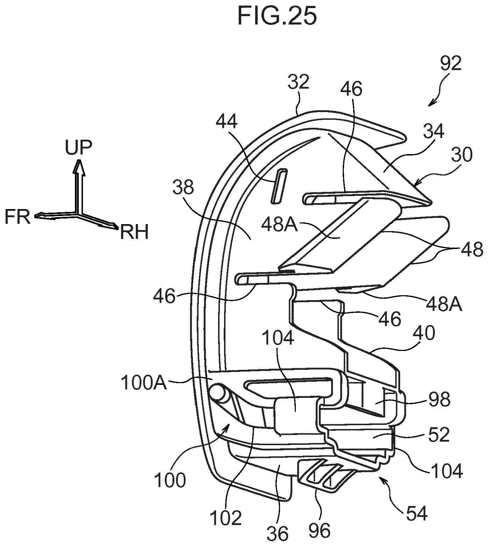

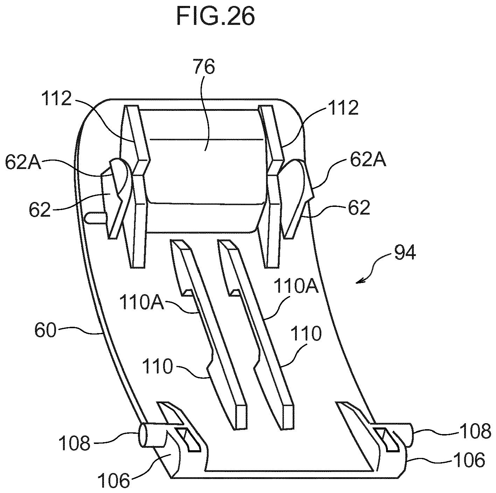

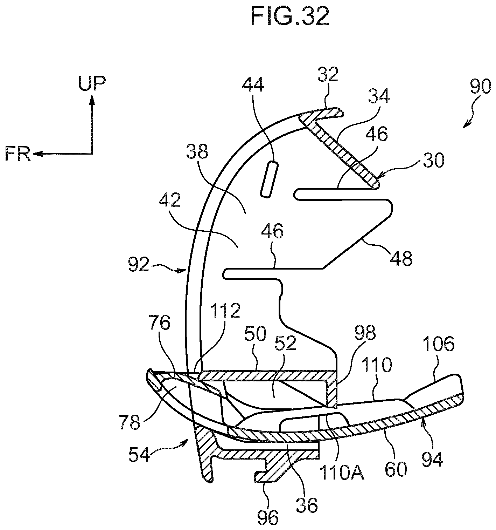

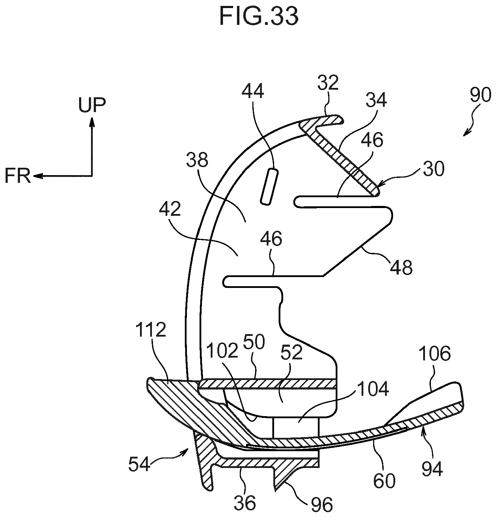

A second embodiment of the present invention is described next by using Fig. 21 through Fig. 33. Note that structures and operation that are basically similar to those of the above-described first embodiment are denoted by the same reference numerals as in the first embodiment, and description thereof is omitted.

### (Structure)

As shown in Fig. 21 through Fig. 23, an anchor cover 90 of a child seat (hereinafter simply called "anchor cover 90") relating to the second embodiment is structured by a base member 92 and a cover member 94. The base member 92 and the cover member 94 are structured basically similarly to the base member 26 and the cover member 28 relating to the above-described first embodiment, but the following points differ.

At the base member 92 relating to the second embodiment, due to the pair of upper and lower slits 46 being formed in each of the left wall 38 and the right wall 40, the one anchor piece 48 is formed in each of the left wall 38 and the right wall 40 respectively. Further, an anchor portion 96, that projects-out from the lower surface of the lower wall 36, is provided at the base member 92. At the time when the base member 92 is mounted to the upwardly-projecting portion 14A of the seat cushion 14, first, the anchor portion 96 is made to catch on the lower edge portion of the anchoring hardware 20. When, in this state, the base member 92 is pushed toward the rear side, the left and right anchor pieces 48 elastically deform by sliding with respect to the left edge portion and the right edge portion of the anchoring hardware 20, and thereafter, elastically return, and the claw portions 48A of the left and right anchor pieces 48 catch on the left edge portion and the right edge portion of the anchoring hardware 20. Due thereto, the base member 92 is anchored to the anchoring hardware 20.

Further, at the base member 92, the base-member-side cover drop-out preventing rib 56 relating to the above-described first embodiment is omitted, and the intermediate wall 50 is extended toward the seat front side. The front portion of the intermediate wall 50 is not connected to the left wall 38 and the right wall 40, and is made to be able to elastically deform vertically. A base-member-side rattling preventing rib 98 for the time when the cover is stored (hereinafter simply called "base-member-side rattling preventing rib 98") projects-out toward the lower side from the lower surface of the rear portion of the intermediate wall 50. As seen in the vertical direction, the base-member-side rattling preventing rib 98 is formed in a substantially U-shape whose front side is open, and, as seen in the left-right direction, the base-member-side rattling preventing rib 98 is formed in a substantially triangular shape whose amount of projection from the intermediate wall 50 decreases while heading toward the front side. The base-member-side rattling preventing rib 98 corresponds to the cover member 94.

Further, at the base member 92, the base-member-side cover guiding ribs 58 relating to the above-described first embodiment are omitted. Instead, slide guiding portions 100 are provided at the base member 92 at the lower end portions of the left wall 38 and the right wall 40, respectively. Guide grooves 102 for the time of opening/closing the cover (hereinafter simply called "guide grooves 102") are formed in the left and right slide guiding portions 100, respectively. The left and right guide grooves 102 are cut-out from the rear end portions of the left wall 38 and the right wall 40 toward the front end portions. The rear portion sides of the guide grooves 102 extend along the front-rear direction, whereas the front portion sides are curved so as to rise upward while heading toward the front side. At the left and right slide guiding portions 100, regions in the vicinities of the front end portions of the guide grooves 102 are rotation fulcrum portions 100A.

Connecting portions 104, that vertically span over the respective guide grooves 102, are provided at the rear portions of the respective slide guiding portions 100. These connecting portions 104 project-out from the respective slide guiding portions 100 toward the left-right direction outer sides of the base member 92. The connecting portions 104 are formed in substantial U-shapes in cross-section whose inner sides in the left-right direction of the base member 92 are open, and the upper end portions are connected integrally with the upper edge portions of the guide grooves 102, and the lower end portions are connected integrally with the lower edge portions of the guide grooves 102. The rigidity of the holding portion 54 is ensured by these connecting portions 104.

On the other hand, the cover member 94 has the cover main body 60 and the lock pieces 62 in the same way as the cover member 28 relating to the above-described first embodiment. However, the cover guiding ribs 64 are omitted. Instead, the cover member 94 has a pair of left and right angle adjusting ribs (posture adjusting portions) 106 and a pair of left and right of guide pins 108 for the time of opening/closing the cover (hereinafter simply called "guide pins 108"). The left and right angle adjusting ribs 106 project-out from the reverse surface of the length direction other end portion (lower end portion) of the cover main body 60. The projecting heights of the angle adjusting ribs 106 from the cover main body 60 become smaller while heading toward the length direction one side (upper end side) of the cover main body 60, and the angle adjusting ribs 106 are formed in substantially triangular shapes as seen in the transverse direction of the cover main body 60 (as seen in the left-right direction). The left and right guide pins 108 project-out from the left and right angle adjusting ribs 106 toward sides opposite one another (toward the transverse direction outer sides of the cover main body 60). The guide pins 108 are formed in solid cylindrical shapes whose axial directions are the transverse direction of the cover main body 60.

Further, at the cover member 94, a pair of left and right rattling preventing ribs 110 for the time when the cover is stored (hereinafter simply called "rattling preventing ribs 110") are formed to project-out at the reverse surface of the cover main body 60. These rattling preventing ribs 110 extend in the length direction of the cover main body 60 at the transverse direction central portion of the cover main body 60. The length direction both end portions of the respective rattling preventing ribs 110 are connected integrally with the cover main body 60 and the length direction intermediate portions are apart from the cover main body 60. The length direction intermediate portion of each of the rattling preventing ribs 110 is an elastically deforming portion 110A.

Further, at the cover member 94, the projecting height of the bulging portion 76 from the cover main body 60 is set to be higher than in the above-described first embodiment. Drop-out preventing ribs 112 for the time when the cover is stored (hereinafter simply called "drop-out preventing ribs 112") are formed integrally with the left and right both sides (the both sides in the cover main body 60 transverse direction) of the bulging portion 76, respectively. The projecting heights of the drop-out preventing ribs 112 from the reverse surface of the cover main body 60 are set to be higher than that of the bulging portion 76.

The cover member 94 of the above-described structure is inserted into the cover storage gap 52 of the base member 92 from the rear side of the base member 92. At this time, the left and right drop-out preventing ribs 112 slide with respect to the front end portion of the intermediate wall 50, and the front portion of the intermediate wall 50 elastically deforms. When, from this state, the cover member 94 is pushed-in further toward the front side of the base member 92, the aforementioned sliding is cancelled, and the front portion of the intermediate wall 50 elastically returns. Due thereto, the cover member 94 is mounted to the base member 92.

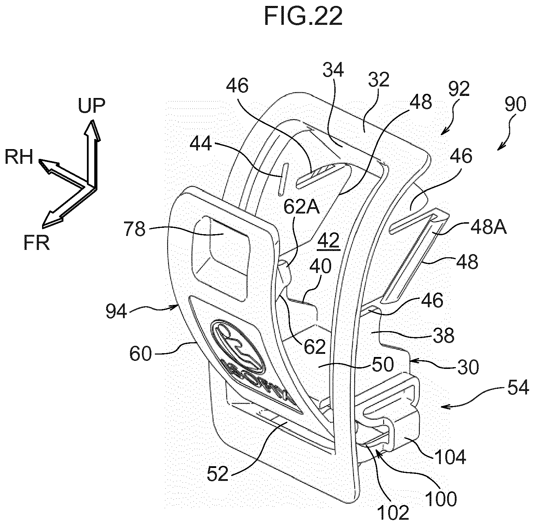

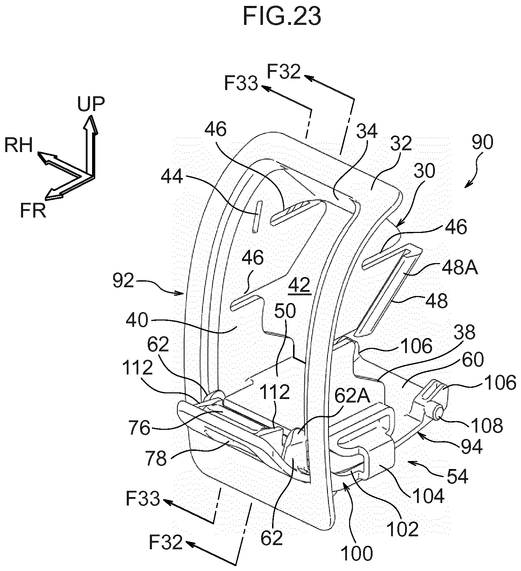

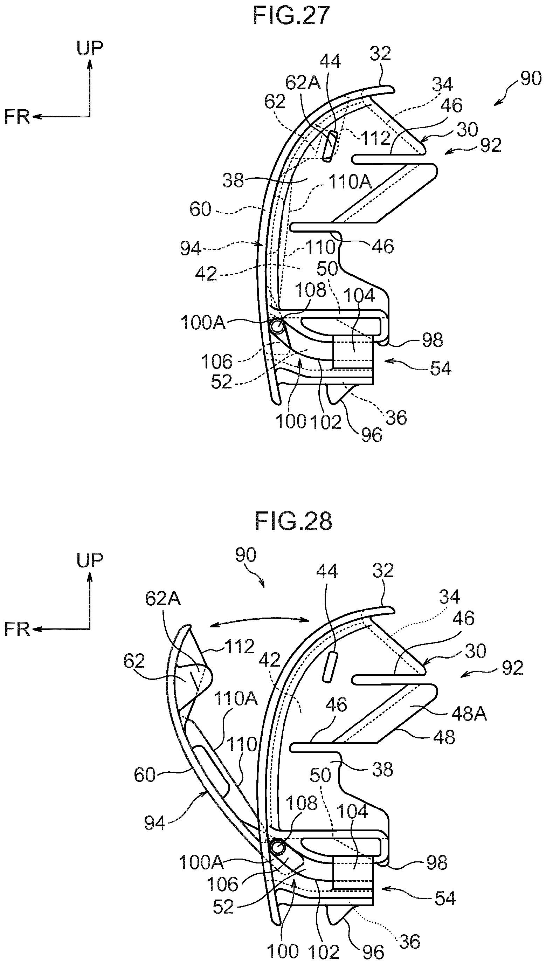

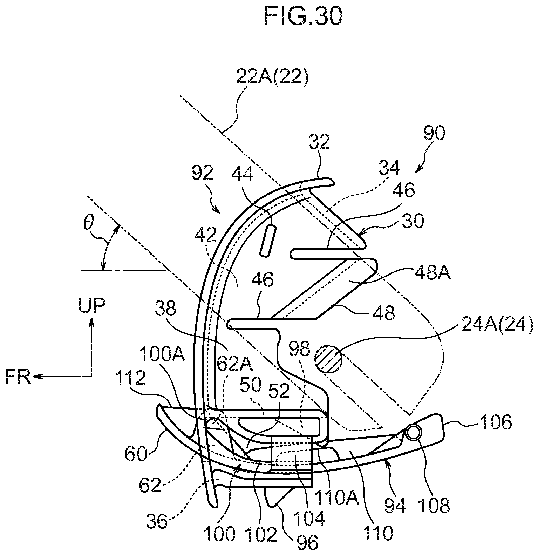

The cover member 94 that is mounted to the base member 92 is made able to move (rotate) with respect to the base member 92 between the closing position shown in Fig. 21 and Fig. 27 and the intermediate position shown in Fig. 22 and Fig. 28, and is made able to move (slide) with respect to the base member 92 between the intermediate position and the stored position shown in Fig. 23 and Fig. 30. The relationship between the base member 92 and the cover member 94 is described in detail hereinafter.

As shown in Fig. 21, in the state in which the cover member 94 is positioned at the closing position, the opening portion 42 of the base member 92 is closed by the cover main body 60. In this state, as shown in Fig. 27, the guide pins 108 of the cover member 94 are engaged with the rotation fulcrum portions 100A of the base member 92. Due thereto, the lower end portion of the cover member 94 is held (restrained) with respect to the base member 92. Further, in this state, as shown in Fig. 27, the claw portions 62A of the lock pieces 62 of the cover member 94 are caught on the edge portions of the lock holes 44 of the base member 92. Due thereto, the upper end portion of the cover member 94 is held (restrained) with respect to the base member 92.

On the other hand, at the time when a vehicle occupant opens the opening portion 42, the vehicle occupant hooks his/her finger or the like on the concave portion 78 of the cover member 94 and pulls the upper portion of the cover member 94 toward the front side, the lock pieces 62 elastically deform, and the state in which the claw portions 62A are caught on the lock holes 44 is released. Due thereto, holding of the upper end portion of the cover member 94 with respect to the base member 92 is released, and the cover member 94 is moved toward the intermediate position shown in Fig. 22 and Fig. 28 with respect to the base member 92. Due thereto, the opening portion 42 of the base member 92 is opened at a half-opened state. At this time, the cover member 94 is rotated in a downwardly-opening form with respect to the base member 92 with the rotation fulcrum portions 100A, with which the guide pins 108 are engaged, being the fulcra of rotation (see Fig. 22 and Fig. 28).

Further, in the state in which the cover member 94 is positioned within the range from the closing position to the intermediate position, due to the engagement of the guide pins 108 and the rotation fulcrum portions 100A, the cover member 94 dropping-out toward the front side with respect to the base member 92 is prevented. Namely, the guide pins 108 and the rotation fulcrum portions 100A function as a stopper for preventing the cover member 94 from dropping-out toward the seat front side with respect to the base member 92.

When the cover member 94 rotates to the intermediate position, as shown in Fig. 28, the angle adjusting ribs 106 abut the upper edge portions of the guide grooves 102. Due thereto, rotation of the cover member 94 further toward the lower side than the intermediate position is restricted. In this state, the cover member 94 is in a posture of running along the direction of sliding toward the stored position with respect to the base member 92.

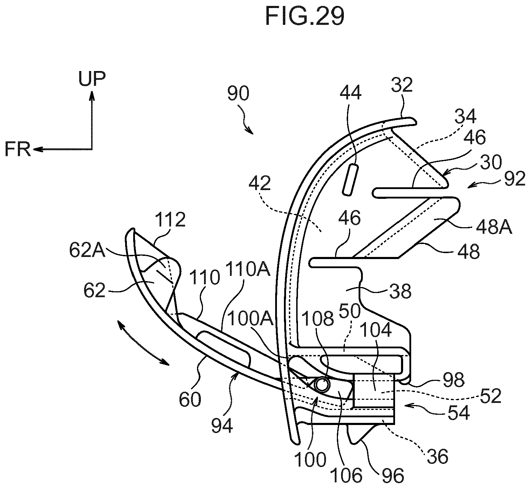

Further, when the cover member 94, that is positioned at the intermediate position as described above, is pushed toward the rear side, the cover member 94 slides from the intermediate position to the stored position with respect to the base member 92 (see Fig. 29). At this time, the guide pins 108 and the angle adjusting ribs 106 of the cover member 94 slide with respect to the edge portions of the guide grooves 102 of the base member 92. Due thereto, sliding of the cover member 94 with respect to the base member 92 is guided.

When the cover member 94 reaches the stored position, as shown in Fig. 23 and Fig. 30, the drop-out preventing ribs 112 of the cover member 94 engage with (abut) the front end portion of the intermediate wall 50 of the base member 92. Due thereto, sliding of the cover member 94 further toward the rear side than the stored position is restricted, and the cover member 94 dropping-out toward the rear side with respect to the base member 92 is prevented. Namely, the drop-out preventing ribs 112 and the intermediate wall 50 function as a stopper for preventing the cover member 94 from dropping-out toward the rear side with respect to the base member 92.

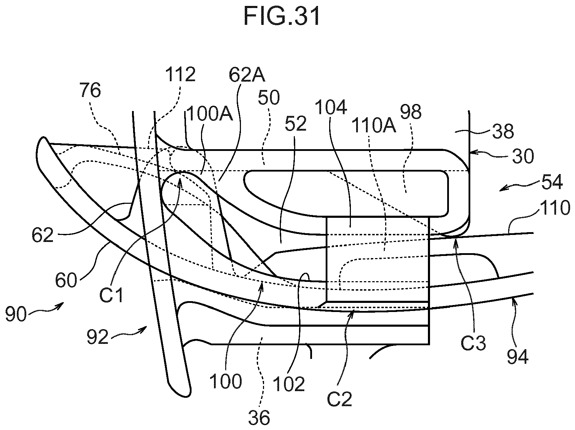

In the state in which the cover member 94 is positioned at the stored position, the cover member 94 is stored in a state of extending toward the rear side from the lower end portion of the opening portion 42, and the opening portion 42 is open. In this state, as shown in Fig. 31, the elastically deforming portions 110A of the rattling preventing ribs 110 of the cover member 94 are pushed toward the lower side by the base-member-side rattling preventing rib 98, and the elastically deforming portions 110A elastically deform toward the lower side. Due thereto, the obverse of the cover member 60 is pushed-against the upper surface of the lower wall 36.

As shown in Fig. 31, at the cover member 94 that is positioned at the stored position, the bulging portion 76 contacts the front end portion of the intermediate wall 50 of the base member 92 at the contact point C1, and a vicinity of the front-rear direction central portion of the cover main body 60 contacts the lower wall 36 of the base member 92 at the contact point C2. Further, at the cover member 94, the left and right rattling preventing ribs 110 contact the base-member-side rattling preventing rib 98 at the contact points C3, respectively.

Namely, the cover member 94 contacts the base member 92 at two places (the contact points C1, C2) that are apart in the front-rear direction, and contacts the base member 92 at other two places (the left and right contact points C3) that are apart in the left-right direction. In this state, the cover member 94 is nipped and held in the seat vertical direction by the lower wall 36 and the intermediate wall 50 of the holding portion 54 of the base member 92.

On the other hand, at the time when the cover member 94 is moved from the stored position to the closing position, the vehicle occupant hooks his/her finger or the like on the concave portion 78 of the cover member 94, and pulls the cover member 94 toward the front side. At this time, due to the guide pins 108 and the angle adjusting ribs 106 sliding with respect to the edge portions of the guide grooves 102, and the cover main body 60 sliding with respect to the lower wall 36, sliding of the cover member 94 with respect to the base member 92 is guided, and the cover member 94 slides from the stored position to the intermediate position.

When the cover member 94 reaches the intermediate position, the guide pins 108 of the cover member 94 engage with the rotation fulcrum portions 100A of the base member 92 (the state shown in Fig. 28). Due thereto, sliding of the cover member 94 further toward the front side than the intermediate position is restricted. In this state, when force toward the seat upper side is applied to the cover member 94, the cover member 94 is rotated toward the seat upper side with respect to the base member 92 with the rotation fulcrum portions 100A being the fulcra of rotation. Then, at the time when the cover member 94 reaches the closing position, due to the claw portions 62A of the lock pieces 62 sliding with respect to the left wall 38 and the right wall 40, the lock pieces 62 elastically deform temporarily toward the opening portion 42 side, and thereafter, elastically return, and the claw portions 62A catch on the edge portions of the lock holes 44. Due thereto, the cover member 94 is held (restrained) at the closing position.

### (Operation and Effects)

In the present embodiment as well, in the open state of the opening portion 42, the cover member 94 is stored in a state of extending from the lower end portion of the opening portion 42 toward the rear side (the deep side in the direction of insertion of the connector 22A). Due thereto, in the same way as in the above-described first embodiment, the substantial open region of the opening portion 42 can be ensured to be wide, and the visibility of the opening portion 42 and the mountability of the child seat 22 can be made to be excellent. Further, the possibility of the cover member 94 being damaged can be reduced, and loss of the cover member 94 can be prevented, and further, lowering of costs can be devised.

Further, in the present embodiment as well, the cover member 94 is rotated with respect to the base member 92 between the closing position and the intermediate position, and is slid with respect to the base member 92 between the intermediate position and the stored position. Due thereto, the structure for moving the cover member 94 between the closing position and the stored position can be made to be simple.

Further, according to the present embodiment, in the state in which the cover member 94 is positioned within the range from the closing position to the intermediate position, the guide pins 108 that are provided at the cover member 94 engage with the rotation fulcrum portions 100A that are provided at the base member 92. Due thereto, the cover member 94 is rotated with the rotation fulcrum portions 100A being the fulcra, and dropping-out of the cover member 94 toward the front side with respect to the base member 92 is prevented. The structure for rotating the cover member 94 and the structure for preventing dropping-out of the cover member 94 toward the front side are provided by the engagement of the guide pins 108 with the rotation fulcrum portions 100A, and therefore, the structure of the anchor cover 90 can be simplified.

Further, when the cover member 94 is rotated from the closing position to the intermediate position with respect to the base member 92, the angle adjusting ribs 106 that are provided at the cover member 94 engage with (abut) the edge portions of the guide grooves 102 that are provided at the base member 92. Due thereto, the cover member 94 is set in a posture of running along the direction of sliding toward the stored position with respect to the base member 92, and the sliding operation thereafter can be carried out easily.

Moreover, in the state in which the cover member 94 is positioned at the stored position, the holding portion 54 that is provided at the base member 92 vertically nips and holds the cover member 94. Due thereto, the cover member 94, that is positioned at the stored position, rattling with respect to the base member 92 can be prevented or suppressed, and therefore, this contributes to the prevention of the occurrence of abnormal noise at the time when the vehicle is traveling. Moreover, the cover member 94, that is nipped and held in the seat vertical direction by the holding portion 54 of the base member 92 as described above, contacts the base member 92 at two places (the contact points C1, C2: see Fig. 31) that are apart in the seat front-rear direction, and contacts the base member 92 at two places (the left and right contact points C3: see Fig. 31) that are apart in the seat left-right direction. Due thereto, rattling, toward the front and the rear, the left and the right, and the up and down, of the cover member 94 with respect to the base member 92 can be effectively prevented or suppressed.

Moreover, in the present embodiment, when the cover member 94 is moved to the stored position, the elastically deforming portions 110A that are provided at the rattling preventing ribs 110 of the cover member 94 are elastically deformed by sliding with respect to the base-member-side rattling preventing rib 98. Due thereto, rattling of the cover member 94 with respect to the base member 92 can be elastically suppressed, and therefore, the effect of preventing or suppressing such rattling can be improved.

Although the present invention has been described above by way of illustration of two embodiments, the present invention is not limited to the above-described respective embodiments, and can be implemented by being modified in various ways within a scope that does not depart from the gist thereof. Further, the technical scope of the present invention is, of course, not limited to the above-described respective embodiments.

## Claims

1. A child seat anchor cover (10, 90) comprising:
a base member (26, 92) that is mounted to a vehicle seat (12), and in which is formed an opening portion (42) into which a connector of a child seat is inserted from a seat front side; and a cover member (28, 94) that is mounted to the base member (26, 92) so as to be movable between a closing position at which the cover member closes the opening portion (42), and a stored position at which the cover member opens the opening portion and is stored in a state of extending toward a seat rear side from a lower end portion of the opening portion (42),
wherein an intermediate position is set between the closing position and the stored position, and the cover member (28, 94) is rotated between the closing position and the intermediate position with respect to the base member (26, 92), and is slid between the intermediate position and the stored position with respect to the base member (26, 92),
**characterized in that** the base member (26, 92) has a slide guiding portion (58, 100) that guides the sliding, and the cover member (28, 94) has a posture adjusting portion (72, 106) that engages with the slide guiding portion (58, 100) at the intermediate position, and, due to the engagement with the slide guiding portion (58, 100), the cover member is in a posture of running along a direction of sliding toward the stored position with respect to the base member (26, 92).

2. The child seat anchor cover (10, 90) of claim 1, wherein
the base member (26, 92) has a rotation fulcrum portion (56,100A) that is a fulcrum of the rotation of the cover member (28, 94), and
the cover member (28, 94) has a rotating/engaging portion (74, 108) that engages with the rotation fulcrum portion in a state in which the cover member is positioned within a range from the closing position to the intermediate position, and the cover member falling-out toward the seat front side with respect to the base member (26, 92) is prevented by the engagement with the rotation fulcrum portion.

3. The child seat anchor cover (10, 90) of claim 1 or 2, wherein a holding portion (54), that vertically nips and holds the cover member (28, 94) that is positioned at the stored position, is provided at the base member (26, 92).

4. The child seat anchor cover (10, 90) of claim 3, wherein an elastically deforming portion (70, 110A), that is elastically deformed due to the cover member (28, 94) moving to the stored position, is provided at at least one of the holding portion (54) or the cover member (28, 94).

5. The child seat anchor cover (10, 90) of any one of claim 1 through claim 4, wherein, at the stored position, the cover member (28, 94) contacts the base member (26, 92) at two places that are apart in a seat front-rear direction, and contacts the base member (26, 92) at two other places that are apart in a seat left-right direction.

6. A vehicle seat (12) comprising:
a seat cushion (14) at which an upwardly-projecting portion, that projects upward, is provided at a rear end portion; and
the child seat anchor cover (10, 90) of any one of claim 1 through claim 5, the base member (26, 92) thereof being mounted to the upwardly-projecting portion (14A).

## Patentansprüche

1. Kindersitzverankerungsabdeckung (10, 90) mit:
einem Basiselement (26, 92), das an einem Fahrzeugsitz (12) befestigt ist und in dem ein Öffnungsbereich (42) vorgesehen ist, in den ein Verbindungsstück eines Kindersitzes von einer Sitzvorderseite aus eingefügt wird; und einem Abdeckelement (28, 94), das an dem Basiselement (26, 92) befestigt ist, so dass es zwischen einer Schließstellung, in der das Abdeckelement den Öffnungsbereich (42) verschließt, und einer Ablagestellung, in der das Abdeckelement den Öffnungsbereich (42) öffnet und in einem Zustand gelagert wird, in dem es sich von einem unteren Endabschnitt des Öffnungsbereichs (42) zu einer Sitzrückseite hin erstreckt, beweglich ist,
wobei zwischen der Schließstellung und der Ablagestellung eine Zwischenstellung eingestellt wird und das Abdeckelement (28, 94) zwischen der Schließstellung und der Zwischenstellung in Bezug auf das Basiselement (26, 92) gedreht und zwischen der Zwischenstellung und der Ablagestellung in Bezug auf das Basiselement (26, 92) geschoben wird,
**gekennzeichnet dadurch, dass** das Basiselement (26, 92) einen Gleitführungsabschnitt (58, 100) aufweist, der die Gleitbewegung führt, und das Abdeckelement (28, 94) einen Einstellabschnitt (72, 106) aufweist, der in der Zwischenstellung in den Gleitführungsabschnitt (58, 100) eingreift, und dass das Abdeckelement aufgrund des Eingriffs in den Gleitführungsabschnitt (58, 100) in Bezug auf das Basiselement (26, 92) in einer Stellung ist, in der es in Richtung der Ablagestellung gleitet.

2. Kindersitzverankerungsabdeckung (10, 90) nach Anspruch 1, wobei
das Basiselement (26, 92) einen Drehpunktabschnitt (56, 100A) aufweist, der als Drehpunkt für die Drehung des Abdeckelements (28, 94) dient, und
das Abdeckelement (28, 94) einen Dreh-/Eingriffsabschnitt (74, 108) aufweist, der in einem Zustand, in dem das Abdeckelement innerhalb eines Bereichs zwischen der Schließstellung und der Zwischenstellung positioniert ist, in den Drehpunktabschnitt eingreift, wobei durch den Eingriff in den Drehpunktabschnitt verhindert wird, dass das Abdeckelement in Bezug auf das Basiselement (26, 92) in Richtung der Sitzvorderseite herausfällt.

3. Kindersitzverankerungsabdeckung (10, 90) nach Anspruch 1 oder 2, wobei an dem Basiselement (26, 92) ein Halteabschnitt (54) vorgesehen ist, der das in der Ablagestellung befindliche Abdeckelement (28, 94) vertikal einklemmt und hält.

4. Kindersitzverankerungsabdeckung (10, 90) nach Anspruch 3, wobei mindestens an dem Halteabschnitt (54) oder dem Abdeckelement (28, 94) ein elastisch verformbarer Abschnitt (70, 110A) vorgesehen ist, der aufgrund der Bewegung des Abdeckelements (28,94) in Richtung der Ablagestellung elastisch verformt wird.

5. Kindersitzverankerungsabdeckung (10, 90) nach einem der Ansprüche 1 bis 4, wobei das Abdeckelement (28, 94) das Basiselement (26, 92) in der Ablagestellung an zwei Stellen berührt, die in einer Sitzlängsrichtung beabstandet sind, und an zwei anderen Stellen, die in einer Sitzbreitenrichtung beabstandet sind.

6. Fahrzeugsitz (12), umfassend:
ein Sitzpolster (14), an dem an einem hinteren Endabschnitt ein aufwärts ragender Abschnitt vorgesehen ist, und
die Kindersitzverankerungsabdeckung (10, 90) nach einem der Ansprüche 1 bis 5, wobei deren Basiselement (26, 92) an dem aufwärts ragenden Abschnitt (14A) vorgesehen ist.

## Revendications

1. Cache pour dispositif d'ancrage de siège auto pour enfant (10, 90) comprenant :
un élément de socle (26, 92) qui est monté sur un siège pour véhicule (12), et dans lequel une partie d'ouverture (42) est formée, dans laquelle une bride de fixation d'un siège auto pour enfant est insérée depuis l'avant du siège ; et un élément de cache (28, 94) qui est monté sur l'élément de socle (26, 92) de façon à pouvoir être déplacé entre une position de fermeture dans laquelle l'élément de cache ferme la partie d'ouverture (42), et une position repliée dans laquelle l'élément de cache ouvre la partie d'ouverture et est replié dans un état d'extension vers l'arrière du siège, depuis une partie d'extrémité inférieure de la partie d'ouverture (42),
dans lequel une position intermédiaire est définie entre la position de fermeture et la position repliée, et l'élément de cache (28, 94) tourne entre la position de fermeture et la position intermédiaire par rapport à l'élément de socle (26, 92), et coulisse entre la position intermédiaire et la position repliée par rapport à l'élément de socle (26, 92),
**caractérisé en ce que** l'élément de socle (26, 92) possède une partie de guidage de coulissement (58, 100) qui guide le coulissement, et l'élément de cache (28, 94) présente une partie de réglage de posture (72, 106) qui s'engage sur la partie de guidage de coulissement (58, 100) dans la position intermédiaire, et, du fait de l'engagement sur la partie de guidage de coulissement (58, 100), l'élément de cache se trouve dans une posture lui permettant de se déplacer dans la direction du coulissement, vers la position repliée par rapport à l'élément de socle (26, 92).

2. Cache pour dispositif d'ancrage de siège auto pour enfant (10, 90) selon la revendication 1, dans lequel
l'élément de socle (26, 92) possède une partie de point d'appui de rotation (56, 100A) qui est un point d'appui pour la rotation de l'élément de cache (28, 94), et
l'élément de cache (28, 94) possède une partie tournante/d'engagement (74, 108) qui s'engage dans la partie de point d'appui de rotation dans un état dans lequel l'élément de cache est placé dans les limites d'une plage entre la position de fermeture et la position intermédiaire, et la sortie et la chute de l'élément de cache vers l'avant du siège par rapport à l'élément de socle (26, 92) sont empêchées grâce à l'engagement sur la partie de point d'appui de rotation.

3. Cache pour dispositif d'ancrage de siège auto pour enfant (10, 90) selon la revendication 1 ou 2, dans lequel une partie support (54), qui pince et retient verticalement l'élément de cache (28, 94) qui est placé en position repliée, est prévue au niveau de l'élément de socle (26, 92).

4. Cache pour dispositif d'ancrage de siège auto pour enfant (10, 90) selon la revendication 3, dans lequel une partie qui se déforme élastiquement (70, 110A), qui est déformée élastiquement du fait que l'élément de cache (28, 94) se déplace dans la position repliée, est prévue au niveau d'au moins l'un des partie support (54) ou élément de cache (28, 94).

5. Cache pour dispositif d'ancrage de siège auto pour enfant (10, 90) selon l'une quelconque des revendications 1 à 4, dans lequel, dans la position repliée, l'élément de cache (28, 94) est en contact avec l'élément de socle (26, 92) en deux emplacements qui sont séparés dans le sens avant-arrière du siège, et est en contact avec l'élément de socle (26, 92) en deux autres emplacements qui sont séparés dans le sens gauche-droite du siège.

6. Siège auto (12) comprenant :
un coussin de siège (14) au niveau duquel une partie saillant vers le haut, qui fait saillie vers le haut, est prévue, au niveau d'une partie d'extrémité arrière ; et
le cache pour dispositif d'ancrage de siège auto pour enfant (10, 90) selon l'une quelconque des revendications 1 à 5, dont l'élément de socle (26, 92) est monté sur la partie saillant vers le haut (14A).
